# EUROPEAN PATENT SPECIFICATION

(11) **EP 0 630 926 B1**
(45) Date of publication and mention of the grant of the patent: **22.12.1999**
(21) Application number: 94201734.4
(22) Date of filing: 17.06.1994
(51) Int. Cl.: C08G 18/66, C08K 5/12, A43B 13/04

(54) **Rubber-like, elastic thermoplastic polyurethane having a hardness Shore A lower than 80**
Kautschukartige elastische thermoplastische Polyurethane mit einer Shore A Härte kleiner als 80
Polyuréthanes caoutchouteux élastiques thermoplastiques ayant une dureté Shore A au-dessous de 80

(30) Priority: 24.06.1993 IT MI931354
(43) Date of publication of application: 28.12.1994
(73) Proprietor: RUB-THANE HOLDING S.A., 2449 Luxembourg (LU)
(72) Inventor: Auci, Pietro, I-24040 Verdellino-Zingonia, Bergamo (IT)
(74) Representative: Marchi, Massimo, Dr.

(56) References cited:
- EP-A- 0 134 455
- EP-A- 0 308 683
- EP-A- 0 417 553
- FR-A- 1 448 894
- FR-A- 1 461 034
- GB-A- 1 024 381
- US-A- 3 012 992
- US-A- 3 016 364
- US-A- 3 689 443

## Description

This invention relates to an elastic and rubber-like thermoplastic polyurethane having a hardness Shore A lower than 80 and a remarkable elastic flow, a process for the preparation thereof and the use thereof in the manufacture of footware and related articles.

It is known that thermoplastic polyurethanes having a hardness Shore A lower than 80 harden and solidify with difficulty. Therefore they are not suitable for being processed by extrusion, injection and moulding or have to remain in the moulds too long, thus making their processing cycle expensive.

EP-A-0 134 455 teaches to reduce the hardness Shore A of a thermoplastic polyurethane having a hardness Shore A of from 95 to 80, and other specific features disclosed therein, by adding, to granules of the said polyurethane, from 11 to 100% (generally from 25 to 70%) by weight of a plasticizer selected among phthalic acid di(methoxyethylester), tricresyl phosphate and diphenyl cresyl phosphate.

However, this prior art does not teach how to produce an elastic thermoplastic polyurethane which is rubber-like both at the sight and to the touch, wherein the hardness Shore A lower than 80 is a feature of the polymer per se which, furthermore, has properties such that it can be processed by extrusion, injection and moulding in fast processing cycles.

It has now surprisingly been found that a thermoplastic polyurethane having both a hardness Shore A lower than 80 and the above properties can be produced according to claim 8.

It is another object of this invention to provide a thermoplastic polyurethane having a hardness Shore A lower than 80 according to claim 1.

The reaction is preferably carried out at a temperature of from 60 to 140°C and for a time of from 1 minute to 3 hours.

Of course, the reaction time is substantially affected by the possible addition of a catalyst, as well as the type of catalyst used and amount thereof.

As regards the type of catalyst, there are apparently no special requirements, and standard catalysts known in the chemistry of polyurethanes can be used. A typical example of a preferred catalyst is Dabco 33LV^{(TM)} of Air Product.

Additives of a known type may be added to the reaction mass to perform known functions without thereby departing from the teaching of this invention. Examples of possible additives are: pigments, mould release agents, plasticizers, stabilizers and the like.

Examples of suitable plasticizers are: dioctyl phthalate and butyl benzyl phthalate. Preferably, their amount is lower than 15% and, more preferably, lower than 10% by weight.

The reaction is carried out in a centrifuge.

The working temperature is preferably of about 90°C and the time of from 5 to 15 minutes.

The tangential speed of the centrifuge is preferably of from 10 to 100 m/sec.

The polyurethane of this invention is prepared by reacting from 80 to about 120 parts by weight of the polyhydroxy compound whose OH number is 56 with from 22 to 33 parts by weight of MDI, 2.8-4.2 parts by weight of MEG, and optionally 2-15 parts by weight of a plasticizer such as butyl benzyl phthalate (Unimol^{TM}, Bayer A.G.) together with a conventional catalyst and mould release agent.

The elastic and non-sticky mass of this invention is rubber-like both at the sight and to the touch and has a hardness Shore A lower than 80. It is shredded according to conventional techniques. Thus a granulate is obtained which is suitable for being processed into manufactured articles by conventional techniques and machines for extruding, injecting, calendering and moulding of thermoplastic polymers.

Said manufactured articles may be extracted from the moulds within a few minutes and are already sufficiently hard and elastic not to undergo permanent set during extraction from the moulds.

The properties of the polyurethanes of this invention are so good that the injection cores can also be extracted from the moulds within from about 5 seconds to 5 minutes leaving the injection channels completely clear.

Another feature of the polyurethane of this invention is that it can easily be glued with conventional adhesives commonly used in the footwear industry, such as TPU (thermoplastic polyurethane) two-component liquid polyurethane.

The favourable properties (i.e. rubber-like both at the sight and to the touch, and high elastic flow) of the polyurethane of this invention make it particularly suitable for the production of those manufactured articles which undergo repeated stresses such as, for example, footwear and parts thereof and, in particular, for the production of soles for footwear. In this type of use another property thereof plays a particularly important role: its good adhesion to the glues used in the footwear industry.

The typical features of a polyurethane of this invention will be better understood with reference to some typical compounds of the invention prepared according to Example 1.

| Polyurethane 1 | |
|---|---|
| Hardness Shore A | 65 |
| Density | 1.2 g/cm³ |
| Ultimate elongation | 400% |
| Tensile strength | 300 kg/cm ² |
| Tear resistance | 160 kg/cm |
| Abrasion resistance | 40 mm ³ |
| Acid and oil resistance | good |
| Hydrolysis resistance | good |

| Polyurethane 6 | |
|---|---|
| Hardness Shore A | 65 |
| Density | 1.2 g/cm³ |
| Ultimate elongation | 800% |
| Tensile strength | 320 kg/cm ² |
| Tear resistance | 130 kg/cm |
| Abrasion resistance | 35 mm ³ |
| Acids and oils | good |
| Hydrolysis resistance | excellent |

The following examples have the aim of illustrating this invention without, however, limiting it in any way.

Unless otherwise stated, in the following examples the term "parts" is used to mean parts by weight.

### EXAMPLE 1

4.07 parts of monoethylene glycol were reacted with the stoichiometric amounts of diisocyanate and polyhydroxy compound required to afford a polyurethane having a hardness Shore A of 65, at 90°C for 5-15 minutes in a centrifuge (tangential speed of from 10 to 100 m/sec).
Note: hardness Shore A decreases as the amount by weight of the polyhydroxy compound increases.

The following compounds were prepared:

| Polyurethane 1 | |
|---|---|
| diisocyanate | MDI |
| polyhydroxy compound | adipic acid/monoethylene glycol polyester (molecular weight of from 1000 to 3000) |

| Polyurethane 2 | |
|---|---|
| diisocyanate | MDI |
| polyhydroxy compound | adipic acid/butanediol polyester (molecular weight of from 1000 to 3000) |

| Polyurethane 3 | |
|---|---|
| diisocyanate | MDI |
| polyhydroxy compound | polycaprolactone (molecular weight of from 1000 to 3000) |

| Polyurethane 4 | |
|---|---|
| diisocyanate | MDI |
| polyhydroxy compound | polyether obtained by polymerization of hydroxylated tetrahydrofuran compounds (molecular of from 1000 to 3000) |

### EXAMPLE 2

The polymerized mass of Polyurethane 1 obtained according to Example 1 above was shredded and then injected into moulds suitable for forming samples having the features set forth in ASTM D412.C for tensile stress tests on rubber.

On the samples obtained in this way elastic flow was measured at the following times; 5 minutes (1 minute in the machine and 4 minutes for placing the specimen onto the dynamometer), 1 day and 5 days.

The samples were subjected to a tensile stress which caused them to elongate up to double (from 25 to 50 mm; tensile stress = 5 kg) and quadruple (from 25 to 100 mm; tensile stress = 6 kg) their original length.

After one minute the specimen was released and its elastic flow measured.

The results are shown in the following table.

**TABLE 1**

| Time after moulding | Length of the specimen (mm) after elongation | | Elastic flow after elongation | |
|---|---|---|---|---|
| | twice | 4 times | twice | 4 times |
| 5 minutes | 29 | 41 | 84% | 78.6% |
| 1 day | 26 | 37 | 96% | 84.0% |
| 6 days | 25.5 | 34 | 98% | 88.0% |

## Claims

1. A thermoplastic polyurethane having a hardness Shore A lower than 80, characterized in that it is the product of reaction of:
a) from 22 to 33 parts by weight of 4,4'-diphenylmethane-diisocynate (MDI),
b) from 80 to 120 parts by weight of a polyhydroxy compound whose OH number is 56 selected among the adipic acid/butanediol, adipic acidlmonoethylene glycol (MEG) and adipic acid/hexanediol poliesters, polycaprolactones and polyethers obtained by polymerization of hydroxylated tetrahydrofuran compounds, and
c) from 2.8 to 4.2 parts by weight of monoethylene glycol.

2. A polyuretane according to claim 1, characterized in that the reaction mass further comprises a catalyst.

3. A polyuretane according to any of claim 1 or 2, characterized in that the reaction mass further comprises conventional additives.

4. A polyuretane according to claim 3, characterized in that the additive is a plasticizer.

5. A polyuretane according to claim 4, characterized in that the plasticizer is dioctyl phthalate or butyl benzyl phthalate.

6. A polyuretane according to claim 5, characterized in that dioctyl phthalate or butyl benzyl phthalate is present in an amount lower than 15% by weight.

7. A polyuretane according to claim 5 or 6, characterized in that dioctyl phthalate or butyl benzyl phthalate is present in an amount lower than 10% by weight.

8. A process for preparing a thermoplastic polyurethane having a hardness Shore A lower than 80, comprising reacting
a) from 22 to 33 parts by weight of 4,4'-diphenylmethane-diisocynate (MDI),
b) from 80 to 120 parts by weight of a polyhydroxy compound whose OH number is 56 selected among the adipic acid/butanediol, adipic acid/monoethylene glycol (MEG) and adipic acid/hexanediol polyesters, polycaprolactones and polyethers obtained by polymerization of hydroxylated tetrahydrofuran compounds, and
c) from 2.8 to 4.2 parts by weight of monoethylene glycol
characterized in that the reaction is carried out in a centrifuge.

9. A process according to claim 8, characterized in that the reaction is carried out at a temperature of from 60 to 120°C and for a time of from 2 minutes to 3 hours.

10. A process according to claims 8 and 9, characterized in that the reaction mass further comprises a catalyst.

11. A process according to any of claims from 8 to 10, characterized in that the reaction mass further comprises conventional additives.

12. A process according to claim 11, characterized in that the additive is a plasticizer.

13. A process according to claim 12, characterized in that the plasticizer is dioctyl phthalate or butyl benzyl phthalate.

14. A process according to claim 13, characterized in that dioctyl phthalate or butyl benzyl phthalate is present in an amount lower than 15% by weight.

15. A process according to claims 13 or 14, characterized in that dioctyl phthalate or butyl benzyl phthalate is present in an amount lower than 10% by weight.

16. A process according to claim 8, characterized in that the reaction is carried out at a temperature of about 90°C for a time of from 5 to 15 minutes.

17. A process according to claim 8, characterized in that the centrifuge is driven at a tangential speed of from 10 to 100 m/sec.

18. Use of a polyurethane according to any of claims from 1 to 7 for manufacturing footwears or parts thereof.

19. Use of a polyurethane according to claim 18 for manufacturing soles for footwears.

20. Footwears and parts thereof when manufactured with a polyurethane according to any of claims from 1 to 7.

21. Soles for footwears which are manufactured with a polyurethane according to any of claims from 1 to 7.

22. Use of a polyurethane prepared with a process according to any of claims from 8 to 17 for manufacturing footwears or parts thereof.

23. Use of a polyurethane according to claim 22 for manufacturing soles for footwears.

24. Footwears and parts thereof when manufactured with a polyurethane prepared with a process according to any of claims from 8 to 17.

25. Soles for footwears which are manufactured with a polyurethane prepared with a process according to any of claims from 8 to 17.

## Patentansprüche

1. Thermoplastisches Polyurethan mit einer Härte Shore A von weniger als 80,
dadurch **gekennzeichnet**, daß
es das Reaktionsprodukt ist aus:
a) 22 bis 33 Gew.Teilen 4,4'-Dphenylmethandiisocyanat (MDI)
b) 80 bis 120 Gew.Teilen einer Polyhydroxyverbindung mit einer OH-Zahl von 56, ausgewählt aus Adipinsäure/Butandiol-, Adipinsäure/Monoethylenglycol (MEG)- und Adipinsäure/Hexandiol-Polyestern, Polycaprolactonen und aus Polyethern, erhalten durch Polymerisation von hydroxylierten Tetrahydrofuranverbindungen, und
c) 2,8 bis 4,2 Gew.Teilen Monoethylenglycol.

2. Polyurethan gemäß Anspruch 1,
dadurch **gekennzeichnet**, daß
die Reaktionsmasse ferner einen Katalysator enthält.

3. Polyurethan gemäß Anspruch 1 oder 2,
dadurch **gekennzeichnet**, daß
die Reaktionsmasse ferner übliche Additive enthält.

4. Polyurethan gemäß Anspruch 3,
dadurch **gekennzeichnet**, daß
das Additiv ein Weichmacher ist.

5. Polyurethan gemäß Anspruch 4,
dadurch **gekennzeichnet**, daß
der Weichmacher Dioctylphthalat oder Butylbenzylphthalat ist.

6. Polyurethan gemäß Anspruch 5,
dadurch **gekennzeichnet**, daß
das Dioctyl- oder Butylbenzylphthalat in einer Menge von weniger als 15 Gew.% vorhanden sind.

7. Polyurethan gemäß Anspruch 5 oder 6,
dadurch **gekennzeichnet**, daß
das Dioctyl- oder Butylbenzylphthalat in einer Menge von weniger als 10 Gew.% vorhanden sind.

8. Verfahren zur Herstellung eines thermoplastischen Polyurethans mit einer Härte Shore A von weniger als 80, wobei man
a) 22 bis 33 Gew.Teile 4,4'-Diphenylmethandiisocyanat (MDI),
b) 80 bis 120 Gew.Teile einer Polyhydroxyverbindung mit einer OH-Zahl von 56, ausgewählt aus Adipinsäure/Butandiol-, Adipinsäure/Monoethylenglycol (MEG) - und Adipinsäure/Hexandiol-Polyestern, Polycaprolactonen und aus Polyethern, erhalten durch Polymerisation hydroxylierter Tetrahydrofuranverbindungen, und
c) 2,8 bis 4,2 Gew.Teile Monoethylenglycol
reagieren läßt,
dadurch **gekennzeichnet**, daß die Reaktion in einer Zentrifuge durchgeführt wird.

9. Verfahren gemäß Anspruch 8,
dadurch **gekennzeichnet**, daß
die Reaktion bei einer Temperatur von 60 bis 120°C und über einen Zeitraum von 2 min bis 3 h durchgeführt wird.

10. Verfahren gemäß Anspruch 8 oder 9,
dadurch **gekennzeichnet**, daß
die Reaktionsmasse ferner einen Katalysator enthält.

11. Verfahren gemäß einem der Ansprüche 8 bis 10,
dadurch **gekennzeichnet**, daß
die Reaktionsmasse ferner übliche Additive enthält.

12. Verfahren gemäß Anspruch 11,
dadurch **gekennzeichnet**, daß
das Additiv ein Weichmacher ist.

13. Verfahren gemäß Anspruch 12,
dadurch **gekennzeichnet**, daß
der Weichmacher Dioctylphthalat oder Butylbenzylphthalat ist.

14. Verfahren gemäß Anspruch 13,
dadurch **gekennzeichnet**, daß
das Dioctyl- oder Butylbenzylphthalat in einer Menge von weniger als 15 Gew.% vorhanden sind.

15. Verfahren gemäß Anspruch 13 oder 14,
dadurch **gekennzeichnet**, daß
das Dioctyl- oder Butylbenzylphthalat in einer Menge von weniger als 10 Gew.% vorhanden sind.

16. Verfahren gemäß Anspruch 8,
dadurch **gekennzeichnet**, daß
die Reaktion bei einer Temperatur von ca. 90°C 5 bis 15 min lang durchgeführt wird.

17. Verfahren gemäß Anspruch 8,
**dadurch gekennzeichnet**, daß
die Zentrifuge mit einer Tangentialgeschwindigkeit von 10 bis 100 m/sec betrieben wird.

18. Verwendung eines Polyurethans gemäß einem der Ansprüche 1 bis 7 zur Herstellung von Schuhwerk oder Teilen davon.

19. Verwendung gemäß Anspruch 18 zur Herstellung von Sohlen für Schuhwerk.

20. Schuhwerk oder Teile davon, herstellbar mit einem Polyurethan gemäß einem der Ansprüche 1 bis 7.

21. Sohlen für Schuhwerk, die mit einem Polyurethan gemäß einem der Ansprüche 1 bis 7 hergestellt werden.

22. Verwendung eines mit einem Verfahren gemäß einem der Ansprüche 8 bis 17 hergestellten Polyurethans zur Herstellung von Schuhwerk oder Teilen davon.

23. Verwendung gemäß Anspruch 22 zur Herstellung von Sohlen für Schuhwerk.

24. Schuhwerk oder Teile davon, herstellbar mit einem Polyurethan, das mit einem Verfahren gemäß einem der Ansprüche 8 bis 17 hergestellt wird.

25. Sohlen für Schuhwerk, welche mit einem Polyurethan hergestellt werden, das mit einem Verfahren gemäß einem der Ansprüche 8 bis 17 hergestellt wird.

## Revendications

1. Polyuréthanne thermoplastique ayant une dureté shore A inférieure à 80, caractérisé en ce qu'il est le produit de la réaction de :
a) de 22 à 33 parties en poids de diisocyanate de 4,4'-diphénylméthane (MDI),
b) de 80 à 120 parties en poids d'un composé polyhydroxy dont l'indice d'OH est égal à 56, choisi parmi des polyesters d'acide adipique/butanediol, acide adipique/monoéthylène glycol (MEG) et acide adipique/ hexanediol, des polycaprolactones, et des polyéthers obtenus par polymérisation de composés hydroxylés de tétrahydrofurane,
c) de 2,8 à 4,2 parties en poids de monoéthylène glycol.

2. Polyuréthanne selon la revendication 1, caractérisé en ce que la masse réactionnelle comprend en plus un catalyseur.

3. Polyuréthanne selon l'une quelconque des revendications 1 ou 2, caractérisé en ce que la masse réactionnelle contient en plus des additifs classiques.

4. Polyuréthanne selon la revendication 3, caractérisé en ce que l'additif est un plastifiant.

5. Polyuréthanne selon la revendication 4, caractérisé en ce que le plastifiant est le phtalate de dioctyle ou le phtalate de butylbenzyle.

6. Polyuréthanne selon la revendication 5, caractérisé en ce que le phtalate de dioctyle ou phtalate de butylbenzyle est présent en une quantité inférieure à 15 % en poids.

7. Polyuréthanne selon la revendication 5 ou la revendication 6, caractérisé en ce que le phtalate de dioctyle ou phtalate de butylbenzyle est présent en une quantité inférieure à 10 % en poids.

8. Procédé de préparation d'un polyuréthanne thermoplastique ayant une dureté shore A inférieure à 80, consistant à faire réagir :
a) de 22 à 33 parties en poids de diisocyanate de 4,4'-diphénylméthane (MDI),
b) de 80 à 120 parties en poids d'un composé polyhydroxy dont l'indice d'OH est égal à 56, choisi parmi des polyesters d'acide adipique/butanediol, acide adipique/monoéthylène glycol (MEG) et acide adipique/ hexanediol, des polycaprolactones, et des polyéthers obtenus par polymérisation de composés hydroxylés de tétrahydrofurane,
c) de 2,8 à 4,2 parties en poids de monoéthylène glycol,
caractérisé en ce que la réaction s'effectue dans une centrifugeuse.

9. Procédé selon la revendication 8, caractérisé en ce que la réaction s'effectue à une température de 60 à 120 °C et pendant une durée de 2 minutes à 3 heures.

10. Procédé selon les revendications 8 et 9, caractérisé en ce que la masse réactionnelle comprend en plus un catalyseur.

11. Procédé selon l'une quelconque des revendications 8 à 10, caractérisé en ce que la masse réactionnelle contient en plus des additifs classiques.

12. Procédé selon la revendication 11, caractérisé en ce que l'additif est un plastifiant.

13. Procédé selon la revendication 12, caractérisé en ce que le plastifiant est le phtalate de dioctyle ou le phtalate de butylbenzyle.

14. Procédé selon la revendication 13, caractérisé en ce que le phtalate de dioctyle ou phtalate de butylbenzyle est présent en une quantité inférieure à 15 % en poids.

15. Polyuréthanne selon la revendication 13 ou la revendication 14, caractérisé en ce que le phtalate de dioctyle ou phtalate de butylbenzyle est présent en une quantité inférieure à 10 % en poids.

16. Procédé selon la revendication 8, caractérisé en ce que la réaction s'effectue à une température d'environ 90 °C pendant une durée de 5 à 15 minutes.

17. Procédé selon la revendication 8, caractérisé en ce que la centrifugeuse est entraînée à une vitesse tangentielle de 10 à 100 m/s.

18. Utilisation d'un polyuréthanne selon l'une quelconque des revendications 1 à 7 pour fabriquer des chaussures ou des parties de chaussures.

19. Utilisation d'un polyuréthanne selon la revendication 18 pour fabriquer des semelles de chaussures.

20. Chaussures et parties de chaussures lorsqu'elles sont fabriquées avec un polyuréthanne selon l'une quelconque des revendications 1 à 7.

21. Semelles pour chaussures qui sont fabriquées avec un polyuréthanne selon l'une quelconque des revendications 1 à 7.

22. Utilisation d'un polyuréthanne préparé par un procédé selon l'une quelconque des revendications 8 à 17 pour fabriquer des chaussures ou des parties de chaussures.

23. Utilisation d'un polyuréthanne selon la revendication 22 pour fabriquer des semelles de chaussures.

24. Chaussures et parties de chaussures lorsqu'elles sont fabriquées avec un polyuréthanne préparé par un procédé selon l'une quelconque des revendications 8 à 17.

25. Semelles pour chaussures qui sont fabriquées avec un polyuréthanne préparé par un procédé selon l'une quelconque des revendications 8 à 17.
